# EUROPEAN PATENT APPLICATION

(11) **EP 4 362 272 A1**
(43) Date of publication of application: **01.05.2024**
(21) Application number: 23202266.5
(22) Date of filing: 06.10.2023
(51) Int. Cl.: H02J 7/00, H01M 10/42

(54) **CELL BALANCING STRATEGY FOR A BATTERY**

(30) Priority: 14.10.2022 GB 202215212
(71) Applicant: Caterpillar Inc., Peoria, IL 61629-9510 (US)
(72) Inventor: McCLOSKEY, James, Peoria 61629-9510 (US); CROSMAN, Alexander, Peoria 61629-9510 (US); RAJALA, V. Kameswara Kiran, Peoria 61629-9510 (US); RANGANATHAN, Srihari, Peoria 61629-9510 (US); SMITH, Michael, Peoria 61629-9510 (US)
(74) Representative: Boult Wade Tennant LLP

(57) **Abstract**

A method of cell balancing for a battery comprising a plurality of cells. The method comprises determining a cell balancing strategy based on at least one of a cell chemistry of the battery; an expected use cycle of the battery; and a first state of the battery, wherein the first state is a detected state of the battery. The method further comprises discharging one or more cells according to the cell balancing strategy when the battery is in a second state, wherein the second state is a detected state of the battery. The cell balancing strategy is configured to discharge one or more of the plurality of cells such that a balancing parameter of each cell being discharged reaches a threshold value. The balancing parameter comprises at least one of a voltage; a state of charge; and a voltage difference.

## Description

### Technical field

This disclosure relates to the field of battery management.

### Background

It is well known that battery cells connected in series can suffer from cell imbalance between the cells. This problem may occur due to variations in capacity between the individual cells, self-discharge of cells such as open-circuit discharge of cells, a temperature gradient across the cells, or other variation in properties or conditions. Cell imbalance may occur both when the cells are in operation and when idle, i.e. in an open circuit and disconnected from any electrical load. A cell with lowest capacity, i.e. the weakest cell, compared to other cells in series may be a limiting factor when charging and discharging. At full state of charge, the weakest cell has the highest voltage. Since charging is often limited by an overvoltage limit, charging may stop when the weakest cell reaches the overvoltage limit, despite the other cells not yet being fully charged. Similarly, discharging is often limited by an undervoltage protection limit. The weakest cell tends to have a lower voltage than the other cells when discharging, for example due to a higher internal resistance or a faster rate of discharge. Owing to this, the weakest cell may reach the undervoltage protection limit before the other cells, which will terminate discharging of the battery. If this happens, the full capacity of the battery will not be utilised.

It is also well known in the art to try to overcome this issue by cell balancing, wherein state of charge of the cells of the battery is adjusted such that the state of charge of every cell is the same. This may be achieved via a cell balancing algorithm that may determine whether there is an imbalance, which cells should be discharged, and by how much. When the cell balancing algorithm determines that a cell or cells should be discharged, the cells may then be discharged either by passive or by active cell balancing. Active cell balancing redistributes charge between cells when the cell balancing algorithm determines that there is an imbalance. This may require additional hardware and a relatively complex system design. Passive cell balancing discharges individual cells to a sink or outlet when the cell balancing algorithm determines that there is an imbalance. For example, KR 102284872 B1 uses a cell balancing algorithm based on state of charge, and discharges cells using passive cell balancing.

However, different cell balancing algorithms may be required depending on various factors such as, but not limited to, a battery type, operating conditions, or a configuration of the battery. Typically, one cell balancing algorithm may be selected for use on a battery, for example based on battery type or configuration, and will remain unchanged over the lifetime of the battery.

### Summary

In one aspect of the present disclosure, there is provided a method of cell balancing for a battery comprising a plurality of cells. The method comprises determining a cell balancing strategy based on at least one of a cell chemistry of the battery; an expected use cycle of the battery; and a first state of the battery, wherein the first state is a detected state of the battery. The method further comprises discharging one or more cells according to the cell balancing strategy when the battery is in a second state, wherein the second state is a detected state of the battery. The cell balancing strategy is configured to discharge one or more of the plurality of cells such that a balancing parameter of each cell being discharged reaches a threshold value. The balancing parameter comprises at least one of a voltage of the cell being discharged; a state of charge of the cell being discharged; and a voltage difference between the cell being discharged and a reference cell, wherein the reference cell is a cell of the plurality of cells having a lowest voltage of the plurality of cells.

In this way, it is possible to adapt the method of cell balancing for batteries with different properties and in different states. The method may choose an appropriate cell balancing strategy based on fixed factors, such as cell chemistry or an expected use cycle of the battery, and/or on detected factors, such as a status of the battery or values of parameters of the battery. The method may be used on batteries with different properties, such as different cell chemistries or architectures. The method may also adapt the cell balancing strategy during a use cycle of the battery. The cell balancing strategy may be triggered based on a detected state of the battery, so that the cell balancing strategy may be triggered when the battery has a status suitable for cell balancing and/or when it is detected that cell balancing is required. A status suitable for cell balancing might, for example, include a status wherein cell balancing will not interrupt functionality of the battery, or a status wherein a cell balancing strategy is likely to be more effective.

In another aspect of the present disclosure, there is also provided a cell balancing system comprising a controller configured to carry out a method of cell balancing for a battery comprising a plurality of cells. The controller is configured to determine a cell balancing strategy based on at least one of a cell chemistry of the battery; an expected use cycle of the battery; and a first state of the battery, wherein the first state is a detected state of the battery. The controller is further configured to discharge one or more cells according to the cell balancing strategy when the battery is in a second state, wherein the second state is a detected state of the battery. The cell balancing strategy is configured to discharge one or more of the plurality of cells such that a balancing parameter of each cell being discharged reaches a threshold value. The balancing parameter comprises at least one of a voltage of the cell being discharged; a state of charge of the cell being discharged; and a voltage difference between the cell being discharged and a reference cell, wherein the reference cell is a cell of the plurality of cells having a lowest voltage of the plurality of cells.

In yet another aspect of the present disclosure, there is also provided a battery comprising a cell balancing system, the cell balancing system comprising a controller configured to carry out a method of cell balancing for a battery comprising a plurality of cells. The controller is configured to determine a cell balancing strategy based on at least one of a cell chemistry of the battery; an expected use cycle of the battery; and a first state of the battery, wherein the first state is a detected state of the battery. The controller is further configured to discharge one or more cells according to the cell balancing strategy when the battery is in a second state, wherein the second state is a detected state of the battery. The cell balancing strategy is configured to discharge one or more of the plurality of cells such that a balancing parameter of each cell being discharged reaches a threshold value. The balancing parameter comprises at least one of a voltage of the cell being discharged; a state of charge of the cell being discharged; and a voltage difference between the cell being discharged and a reference cell, wherein the reference cell is a cell of the plurality of cells having a lowest voltage of the plurality of cells.

### Brief description of the drawings

A specific embodiment of the disclosure will now be described, by way of example only, with reference to the accompanying drawings in which:
Figure (Fig.) 1 shows a flow chart illustrating a method of cell balancing of a battery according to an embodiment of present disclosure.
Fig. 2 shows a flow chart illustrating a top end voltage cell balancing strategy used in the method, in accordance with an embodiment of present disclosure.
Fig. 3 shows a flow chart illustrating a state of charge cell balancing strategy used in the method, in accordance with to an embodiment of present disclosure.
Fig. 4 shows a flow chart illustrating a voltage difference cell balancing strategy used in the method, in accordance with to an embodiment of present disclosure.

### Detailed description

A method of cell balancing is provided according to an embodiment of this disclosure for a battery comprising more than one cell. The method is flexible, such that the cell balancing algorithm, also referred to herein as cell balancing strategy, selected is adapted to a property of the battery or to a state of the battery, and the triggering of the chosen cell balancing strategy is adapted to a state of the battery.

The method of cell balancing may be for a battery of an electric work vehicle.

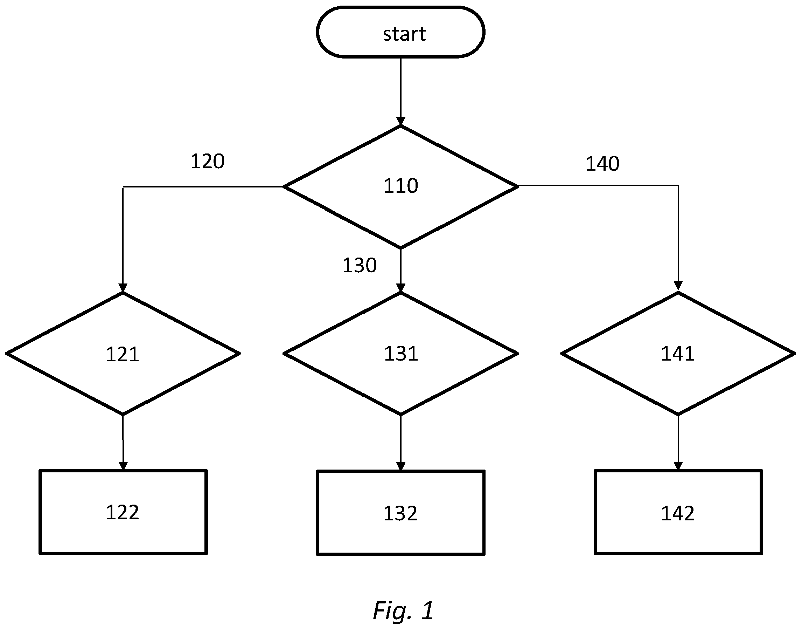

With reference to Fig. 1, according to an embodiment of this disclosure a method of cell balancing for a battery comprising a plurality of cells comprises determining a cell balancing strategy at step 110 based on at least one of a cell chemistry of the battery, an expected use cycle of the battery, and a first state of the battery. The first state is a detected state of the battery. The method further comprises discharging one or more cells according to the cell balancing strategy when the battery is in a second state. The second state is a detected state of the battery. The cell balancing strategy is configured to discharge one or more of the plurality of cells such that a balancing parameter of each cell being discharged reaches a threshold value, wherein the balancing parameter comprises at least one of a voltage of the cell being discharged, a state of charge of the cell being discharged, and a cell voltage difference between the cell being discharged and a reference cell, wherein the reference cell is the cell of the plurality of cells that has a lowest voltage of the plurality of cells.

The cell balancing strategy determined at step 110 uses at least one of the three balancing parameters described above, illustrated by three paths in the flow chart of Fig. 1. Following path 120, in an event that at step 121 the battery is in the second state, at step 122 one or more cells are discharged according to a cell balancing strategy configured to discharge one or more of the plurality of cells such that a voltage of each cell being discharged reaches a threshold value. Following path 130, in an event that at step 131 the battery is in the second state, at step 132 one or more cells are discharged according to a cell balancing strategy configured to discharge one or more of the plurality of cells such that a state of charge of each cell being discharged reaches a threshold value. Following path 140, in an event that at step 141 the battery is in the second state, at step 142 one or more cells are discharged according to a cell balancing strategy configured to discharge one or more of the plurality of cells such that a cell voltage difference between the cell being discharged and a reference cell reaches a threshold value.

As described above, the cell balancing strategy be determined based on one or more factors. A factor may be used to choose a cell balancing strategy, or to rule out a cell balancing strategy. The factors may be fixed factors or detected factors.

Fixed factors may be fixed for the lifetime of the battery, or may be pre-set for a certain period of time. For example, cell chemistry of the battery is fixed for the lifetime of the battery. An expected use cycle of the battery may be set for a length of time, or for a particular number of use cycles. The expected use cycle may be set by a manager, for example a worksite manager, or by another user, or the expected use cycle may be set by a controller. The expected use cycle may be based on expected work that a work vehicle comprising the battery will carry out. For example, the expected use cycle may be based on scheduled use of the work vehicle, or on data relating to past use of the work vehicle. The cell balancing strategy may also be based on other fixed factors.

Detected factors may be factors that change during use of the battery. A detected factor may relate to a detected status of the battery. In other words, the detected factor may relate to how the battery is being used, for example if it is charging, discharging, online, or on standby or idling. The detected factor may relate to a detected parameter. In other words, the detected state may relate to how properties or parameters of the battery change during its use. For example, the detected factor may relate to a cell voltage, cell state of charge, cell voltage difference, or other battery parameter. The first state of the battery may comprise a first status, or a first parameter, or both a first status and a first parameter. The first status is a detected status. The first parameter is a detected parameter

The cell balancing strategy may be determined in one or more stages. For example, the cell balancing strategy may be entirely determined by fixed factors. Otherwise, the cell balancing strategy may be entirely determined by detected factors. In another example, fixed factors may be used to rule out a cell balancing strategy and detected factors may be used to choose from the remaining cell balancing strategies.

As described, determining a cell balancing strategy is based on at least one of a cell chemistry of the battery, an expected use cycle of the battery, and a first state of the battery. The first state is a detected state of the battery, and may change during use of the battery. The first state of the battery may comprise a first status, wherein the first status may be indicative of how the battery is being used. The first status may be changeable between two or more of charging, discharging, online, on standby, or having a state of charge within a first state of charge range. The first state of the battery may comprise a first parameter, wherein the first parameter is indicative of one or more properties of the battery. The first parameter of the battery may comprise a voltage or a state of charge. For example, the first parameter may comprise a value of voltage or state of charge, or the first parameter may comprise a rate of change of voltage or state of charge.

The cell balancing strategy is configured to discharge one or more of the plurality of cells such that a balancing parameter of each cell being discharged reaches a threshold value. The balancing parameter is one of a voltage of the cell being discharged; a state of charge of the cell being discharged; and a cell voltage difference between the cell being discharged and a reference cell. The cell balancing strategy for each of the three parameters will now be discussed in more detail.

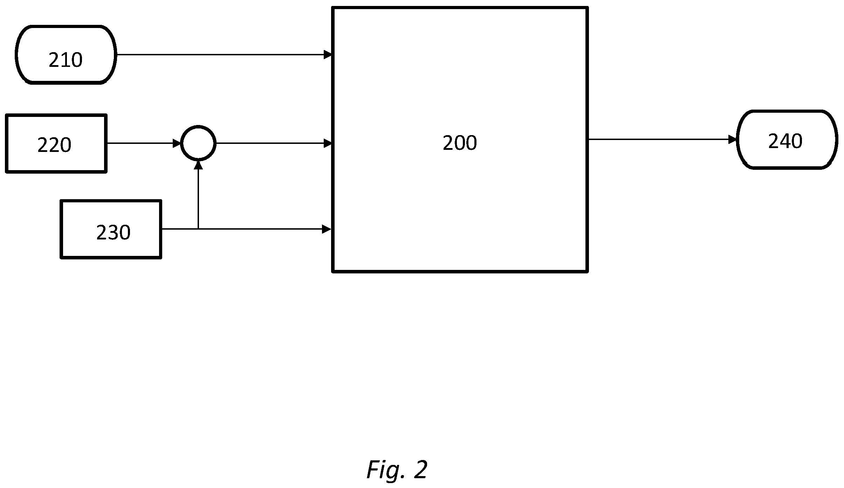

A top end cell balancing strategy is configured to discharge one or more of the plurality of cells such that a cell voltage of the cell or cells reaches a threshold voltage. In an event that the cell voltage of a cell is above a threshold voltage, the cell balancing strategy may comprise discharging that cell until the cell being discharged has a voltage that is equal to or less than the threshold voltage. The top end cell balancing strategy may be initiated when a cell voltage is detected to be higher than a threshold voltage or when a cell voltage is detected to be increasing and exceeds the threshold value. The top end cell balancing strategy may be stopped when the cell voltage reaches the threshold voltage. The top end cell balancing strategy may be applied to one or more cells. The top end cell balancing strategy may consider hysteresis of the voltage. With reference to Fig. 2, the inputs for determining whether a top end cell balancing is required 200 may comprise a cell voltage array 210, a balancing hysteresis 220 and a threshold voltage 230. The output may comprise a hysteresis value used to determine at 240 whether cell balancing is required.

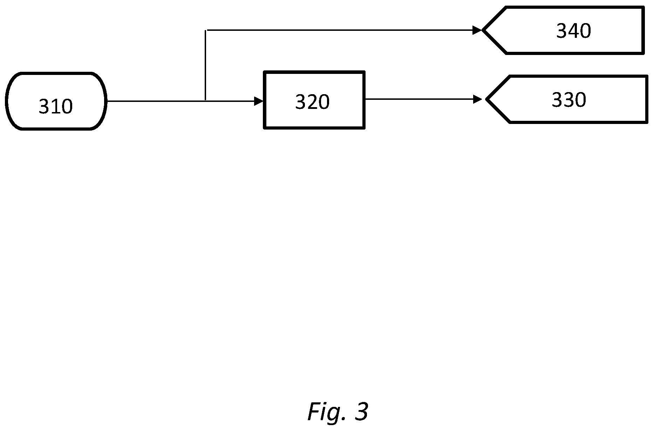

A state of charge cell balancing strategy is configured to discharge one or more of the plurality of cells such that a state of charge of the cell or cells reaches a threshold state of charge. The state of charge cell balancing strategy may comprise determining a state of charge of each of the plurality of cells. A reference state of charge may be identified, wherein the reference state of charge is the minimum state of charge of the plurality of cells. A balancing length of time may be calculated for bringing each of the plurality of cells to the reference state of charge. For each of the plurality of cells with a state of charge higher than the reference state of charge, the cell or cells may be discharged for the balancing length of time. The cell balancing strategy may stop discharging the cell or cells once the balancing length of time is over, or once the state of charge of the cell or cells reaches the reference state of charge. With reference to Fig. 3, a cell state of charge array 310 for the plurality of cells is used to determine the reference state of charge 330 by identifying the minimum state of charge 320 of the cell state of charge array 310. This reference state of charge 330 is used to calculate the balancing of the other cells 340 from the cell state of charge array.

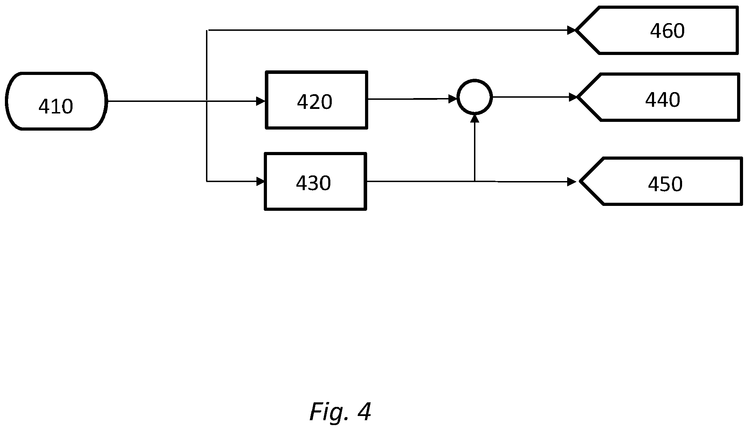

A voltage difference cell balancing strategy is configured to discharge one or more of the plurality of cells such that a voltage between the cell or cells and a reference cell reaches a threshold voltage difference, wherein the reference cell is the cell of the plurality of cells having the lowest voltage. For each of the plurality of cells with a voltage difference higher than a threshold voltage difference, the cell or cells may be discharged until the cell voltage difference for each cell is lower than the threshold voltage difference. The cell balancing strategy may stop discharging the cell or cells once the voltage difference of the cell or cells reaches the threshold voltage difference. The voltage difference cell balancing strategy may be triggered when a voltage difference between a cell having the highest voltage of the plurality of cells and the reference cell exceeds a maximum voltage difference. With reference to Fig. 4, a cell voltage array 410 is used to determine the maximum voltage 420 of the cell voltage array 410, and the minimum voltage 430 of the cell voltage array 410. The difference between the maximum voltage 420 and the minimum voltage 430 gives the maximum voltage difference 440. The minimum voltage 430 provides a target voltage 450 for a balanced battery. The cells may be balanced until each voltage difference is within a tolerance of the target voltage 450, i.e. below a threshold voltage difference. The maximum voltage difference 440 and target voltage 450 are used when determining the balancing of the other cells 460 from the cell voltage array.

The cell balancing strategy may be triggered when the battery is in the second state. The second state may comprise at least one of a second status and a second parameter. Cell balancing may occur when the second parameter exceeds a threshold. The second state may comprise at least one of a voltage of a cell; a state of charge of a cell; and a voltage difference between a cell and the reference cell. In an embodiment, the value of the second parameter may be determined continuously or at regular intervals throughout the use of the battery. In another embodiment, the value of the second parameter may be determined when the battery has the second status, wherein the second status is indicative of how the battery is being used. The value of the second parameter may be determined when the status of the battery changes such that the battery has the second status, or the value of the second parameter may be determined continuously or at regular intervals while the battery has the second status.

The second status may comprise one or more of charging; discharging; online; on standby; having a state of charge within a first state of charge range; at an end of a charge cycle; and after a state of charge has been reset. The status of the battery may be changeable between two or more of those statuses.

In an event that the cell balancing strategy chosen is the top end cell balancing strategy, the second state may comprise a second parameter comprising a cell voltage, wherein the cell balancing strategy may be triggered when a cell voltage (of one or more of the plurality of cells) exceeds the threshold voltage. The second state may further comprise a second status of the battery. For example, the second parameter may only be determined and compared to the threshold voltage when the battery has the second status.

In an event that the cell balancing strategy chosen is the state of charge cell balancing strategy, the second state may comprise a second parameter comprising a cell state of charge, wherein the cell balancing strategy may be triggered when a cell state of charge (of one or more of the plurality of cells) exceeds a threshold state of charge. The second state may further comprise a second status, such as an end of a charge cycle or the state of charge having been reset. For example, the second parameter may only be determined and compared to the threshold state of charge when the battery has the second status.

In an event that the cell balancing strategy chosen is the voltage difference cell balancing strategy, the second state may comprise a second parameter comprising a voltage difference between a cell and the reference cell, wherein the reference cell is the cell of the plurality of cells having the lowest voltage. The cell balancing strategy may be triggered when the voltage difference of a cell of one or more of the plurality of cells exceeds a voltage difference threshold. The second state may further comprise a second status. For example, the second parameter may only be determined and compared to the threshold voltage difference when the battery has the second status.

The method may further comprise one or more disablement conditions configured to stop cell balancing. The cell balancing strategy may be configured to stop discharging the one or more cells being discharged when the balancing parameter reaches the threshold value. In other words, the cell balancing strategy may be configured to stop discharging the one or more cells being discharged once the cells are balanced. The top end cell balancing strategy may be configured to stop discharging a cell being discharged when the voltage of the cell being discharged reaches the threshold voltage. The state of charge cell balancing strategy may be configured to stop discharging a cell being discharged when the state of charge of the cell being discharged reaches the reference state of charge, or when the balancing length of time is over. The voltage difference cell balancing strategy may be configured to stop discharging a cell being discharged when the voltage difference between the cell being discharged and the reference cell reaches the threshold voltage difference. For any of the cell balancing strategies, the method may be configured to stop discharging a cell in an event that the cell being discharged reaches an undervoltage condition, for example in an event that the voltage of the cell being discharged reaches a disablement voltage. The undervoltage condition may be different to the threshold value, and may be for a parameter that is different to the balancing parameter.

In an embodiment, the method may comprise a disablement condition configured to stop cell balancing in an event that a safety parameter is outside of a safety range. In an embodiment, the disablement condition may be configured to stop cell balancing in an event that a temperature of a cell or other component of the battery exceeds a threshold temperature. In other examples, the disablement condition may be configured to stop cell balancing in an event that a cell voltage is below a disablement threshold voltage value, or in an event that an internal fault in the battery management system is detected, or in an event that another fault is detected.

As described above, the cell balancing strategy may be determined based on a detected state of the battery. The cell balancing strategy used may therefore change during a use cycle of the battery, depending on the detected state of the battery.

The cell balancing strategy may be applied to one or more of the plurality of cells at a given time. In an event that the cell balancing strategy is applied to more than one cell at a given time, the disablement condition may stop the cell balancing for each cell being discharged individually, or may stop the cell balancing for all cells being discharged. For example, the cell balancing strategy may be configured to stop discharging the one or more cells being discharged when the balancing parameter reaches the threshold value. The cell balancing strategy may be configured to stop discharging each cell being discharged when the balancing parameter for that cell reaches the threshold value. Otherwise, the cell balancing strategy may be configured to stop discharging all cells being discharged when the balancing parameter has reached the threshold value for all the cells being discharged.

As discussed, the different cell balancing strategies may be more appropriate for different first states of the battery. For example, in an event that a battery has a voltage curve with a low gradient, the voltage based cell balancing strategies may be less effective than the state of charge cell balancing strategy. In an event that the battery is undergoing fast charging or has a transient cycle with few rest periods, it may be more appropriate to use a state of charge cell balancing strategy than a voltage difference cell balancing strategy. In an event that a rest period then occurs, it may be preferable to use a voltage based cell balancing strategy to limit errors building up in the calculations for the state of charge based cell balancing strategy.

Examples of cell chemistries may include lithium ferro-phosphate (LFP), lithium-titanium-oxide (LTO) and lithium nickel manganese cobalt oxides (NMC).

Each of the cell balancing strategies described drains cells of the battery in order to balance the cells. The cell balancing strategies may employ passive cell balancing, such that the cells are drained to a sink, or active cell balancing, such that the charge is drained from a cell and redistributed to another cell.

Examples of expected use cycles may include expected charging cycles, for example comprising charging rates, and/or amount of charge. Examples of expected use cycles may include expected discharging cycles, for example comprising discharging rates, and/or amount of charge. The first and second state of the battery may also comprise one or more of charging rates, discharging rates, and amount of charge being charged or discharged. Use cycles,the first state and the second state may also comprise slow charge, fast charge with no rest period after charging, fast charge with a rest period after charging, and a machine drive cycle for a battery-powered machine. Other considerations for the expected use cycle, first state and second state of the battery may include whether the battery is being used in a charge-sustaining application in a hybrid transmission machine, or in a charge-depleting application in a battery-powered machine. Where a battery is used in a hybrid transmission, i.e.along side other power sources, for example in a hybrid work vehicle, the battery may rarely deviate from a mid-range state of charge, so a state of charge cell balancing strategy may be less appropriate than voltage based cell balancing strategies. Where a battery is used in a battery powered machine, such as an electric work vehicle, the state of charge of the battery is regularly across a large range of state of charge, from high state of charge to low state of charge, and so a state of charge cell balancing strategy may be appropriate. For a battery powered machine, a rate of charging may be a significant factor in determining a cell balancing strategy, both as a initial choice at the start or prior to the start of a use cycle, and to change the cell balancing strategy during a use cycle.

In certain examples, a top end cell balancing strategy may be more appropriate during a slow charge than during another battery status or use cycle. In certain examples, some battery chemistries may undergo less effective cell balancing using a voltage difference cell balancing strategy than other cell chemistries, due to having a flatter voltage curve than other cell chemistries, particularly in a central range of state of charge. However, if the cell is undergoing a slow charge then a voltage difference cell balancing strategy may be appropriate for even for that cell chemistry. In another example, batteries of various chemistries may undergo effective cell balancing using a state of charge cell balancing strategy with a high accuracy, whether the battery is in slow charge, fast charge or a machine drive cycle. If a state of charge cell balancing strategy is used that has lower accuracy, some cell chemistries may undergo more effective cell balancing than others, for example an LFP battery may undergo more effective cell balancing. It will be understood that these are examples, and are not intended to be limiting.

As noted above, the first state and the second state are detected states of the battery. Any of the methods described above may further comprise a step of detecting the first state.

Any of the methods described above may further comprise a step of detecting the second state.

According to an embodiment of the disclosure, a cell balancing system is provided, comprising a controller configured to carry out any of the methods described above.

According to an embodiment of the disclosure, a battery comprising a plurality of cells is provided, wherein the battery employs any of the methods described above. The battery may comprise a controller configured to carry out any of the methods described above. The cell may comprise a battery pack, or the cell may comprise a string comprising more than one battery pack. The battery may comprise two or more cells. The two or more cells may be in series or in parallel.

## Claims

1. A method of cell balancing for a battery comprising a plurality of cells, the method comprising:
determining a cell balancing strategy based on at least one of:
a cell chemistry of the battery;
an expected use cycle of the battery; and
a first state of the battery, wherein the first state is a detected state of the battery; and
discharging one or more cells according to the cell balancing strategy when the battery is in a second state, wherein the second state is a detected state of the battery;
wherein the cell balancing strategy is configured to discharge one or more of the plurality of cells such that a balancing parameter of each cell being discharged reaches a threshold value, wherein the balancing parameter comprises at least one of:
a voltage of the cell being discharged;
a state of charge of the cell being discharged; and
a voltage difference between the cell being discharged and a reference cell, wherein the reference cell is a cell of the plurality of cells having a lowest voltage of the plurality of cells.

2. The method of claim 1 wherein the first state of the battery comprises one or more of:
a first status of the battery; and
a first parameter of the battery.

3. The method of claim 2 wherein the first status of the battery is changeable between two or more of:
charging;
discharging;
online;
on standby; and
having a state of charge within a first state of charge range.

4. The method of claim 2 or 3 wherein the first parameter of the battery comprises one or more of:
a voltage;
a state of charge; and
a charging rate.

5. The method of any preceding claim wherein in the balancing parameter comprises the voltage of the cell being discharged, wherein the threshold value comprises a threshold voltage and in an event that the voltage of one or more cells is above the threshold voltage, the cell balancing strategy comprises discharging the one or more cells until the one or more cells being discharged has a voltage that is equal to or less than the threshold voltage.

6. The method of any preceding claim wherein the balancing parameter comprises the state of charge of the cell being discharged, wherein the cell balancing strategy comprises:
determining a state of charge of each of the plurality of cells;
identifying the reference state of charge, wherein the reference state of charge is the minimum state of charge of the plurality of cells;
calculating a balancing length of time for bringing each of the plurality of cells to the reference state of charge; and
for each of the plurality of cells with a state of charge higher than the reference state of charge, discharging each of the plurality of cells for the balancing length of time;
wherein the threshold value comprises a reference state of charge.

7. The method of any preceding claim wherein the balancing parameter comprises the cell voltage difference, wherein threshold value comprises a threshold voltage and wherein the cell balancing strategy comprises:
for each of the plurality of cells, determining a voltage difference between the cell and the reference cell;
for each of the plurality of cells with a voltage difference higher than the threshold voltage difference, discharging the cell being discharged until the cell voltage difference is lower than the threshold voltage difference.

8. The method of any preceding claim wherein the second state comprises at least one of:
a second status; and
a second parameter, wherein the second parameter comprises at least one of:
a voltage of a cell;
a state of charge of a cell; and
a voltage difference between a cell and the reference cell.

9. The method of claim 8 wherein the second status comprises at least one of:
charging;
discharging;
online;
on standby;
having a state of charge within a first state of charge range;
at an end of a charge cycle; and
after a state of charge has been reset.

10. The method of claim 8 or 9 wherein the second state comprises the second parameter, and wherein in the second state one or more of the plurality of cells has at least one of:
a voltage higher than the threshold voltage;
a state of charge higher than the reference state of charge; and
a voltage difference between the cell and the reference cell higher than the threshold voltage difference.

11. The method of any preceding claim, wherein the cell balancing strategy stops discharging the one or more cells being discharged when the balancing parameter reaches the threshold value.

12. The method of any preceding claim, wherein the cell balancing strategy stops discharging the one or more cells being discharged when a safety parameter is outside of a safety range, wherein the safety parameter comprises at least one of:
a temperature;
a voltage; and
a fault condition.

13. The method of any preceding claim, wherein the cell being discharged is discharged to a sink.

14. A cell balancing system comprising a controller configured to carry out any of the methods of claims 1 to 13.

15. A battery comprising a plurality of cells and the cell balancing system of claim 14.
